# EUROPEAN PATENT APPLICATION

(11) **EP 1 622 051 A2**
(43) Date of publication of application: **01.02.2006**
(21) Application number: 05254373.3
(22) Date of filing: 13.07.2005
(51) Int. Cl.: G06F 17/30, G06F 3/033, H04N 5/445

(54) **Method of displaying web document on consumer electronics device**

(30) Priority: 20.07.2004 KR 2004056427
(71) Applicant: SAMSUNG ELECTRONICS CO., LTD., Suwon-si, Gyeonggi-Do 442-742 (KR)
(72) Inventor: Cha, Soon-back 203-806 Maetan Seongil Apt., Gyeonggi-do (KR)
(74) Representative: Brandon, Paul Laurence

(57) **Abstract**

A method of displaying a web document is provided. The method includes: receiving a signal containing a request for displaying predetermined marks representing components of the web document; and depending on whether or not the signal is received, displaying the predetermined marks representing the components of the web document, whereby the user can easily select a link and an input window only using a remote controller.

## Description

The present invention relates to devices displaying a web document, to methods of displaying a web document, to remote controlling methods, to remote controllers and to computer readable media and to consumer electronics (CE) devices capable of displaying a web document.

In general, a web document includes a plurality of links and input windows. In a typical computer environment, the plurality of links and input windows may be selected using an input device such as a mouse. However, for a consumer electronics device, a remote controller instead of the input device is provided, because this is more suited to the purpose of the device and the targeted consumers. In the conventional CE device environment, links and input windows in the web document are selected using only the remote controller, which is very inconvenient for a user to select. As a result, a website related task such as web surfing cannot be easily performed.

Preferred embodiments of the present invention aim to provide an apparatus and method capable of easily selecting a link and an input window using only a remote controller. In addition, preferred embodiments of the present invention also aim to provide a computer-readable medium having embodied thereon a computer-executable program for the method.

According to an aspect of the present invention, there is provided a method of displaying a web document comprising: receiving a signal containing a request for displaying predetermined marks representing respective components of the web document; and depending on whether or not the signal is received, displaying predetermined marks representing the respective components of the web document.

According to another aspect of the present invention, there is provided a consumer electronics device comprising a signal receiving unit receiving a signal containing a request for displaying predetermined marks representing components of a web document; and a display unit displaying the predetermined marks representing the components of the web document depending on whether or not the signal is received.

According to another aspect of the present invention, there is provided a remote controlling method generating a signal containing a request for displaying predetermined marks representing respective components of a web document; and transmitting the generated signal.

According to another aspect of the present invention, there is provided a remote controller comprising: a signal generation unit generating a signal to display predetermined marks representing respective components of a web document; and a signal transmission unit transmitting the generated signal.

According to another aspect of the present invention, there is provided a computer-readable medium having embodied thereon a computer program for the method of displaying the web document.

According to another aspect of the present invention, there is provided a computer-readable medium having embodied thereon a computer program for a remote controlling method.

Further features of the present invention are set out in appended claims.

The present invention will become more apparent by describing in detail exemplary embodiments thereof with reference to the attached drawings in which:
FIG. 1 is a schematic diagram of a remote controller according to an embodiment of the present invention;
FIG. 2 is a diagram showing a remote control key panel according to an embodiment of the present invention;
FIG. 3 is a schematic diagram of a consumer electronics device according to an embodiment of the present invention;
FIG. 4 is a diagram showing a first link displaying method according to an embodiment of the present invention;
FIG. 5 is a diagram showing a second link displaying method according to an embodiment of the present invention;
FIG. 6 is a diagram showing a first input displaying method according to an embodiment of the present invention;
FIG. 7 is a diagram showing a second input displaying method according to an embodiment of the present invention;
FIGS. 8 and 9 are flowcharts for explaining a remote controlling method according to an embodiment of the present invention; and
FIGS. 10 and 11 are flowcharts for explaining a method of displaying a web document according to an embodiment of the present invention.

Now, exemplary embodiments of the present invention will be described with reference to the attached drawings.

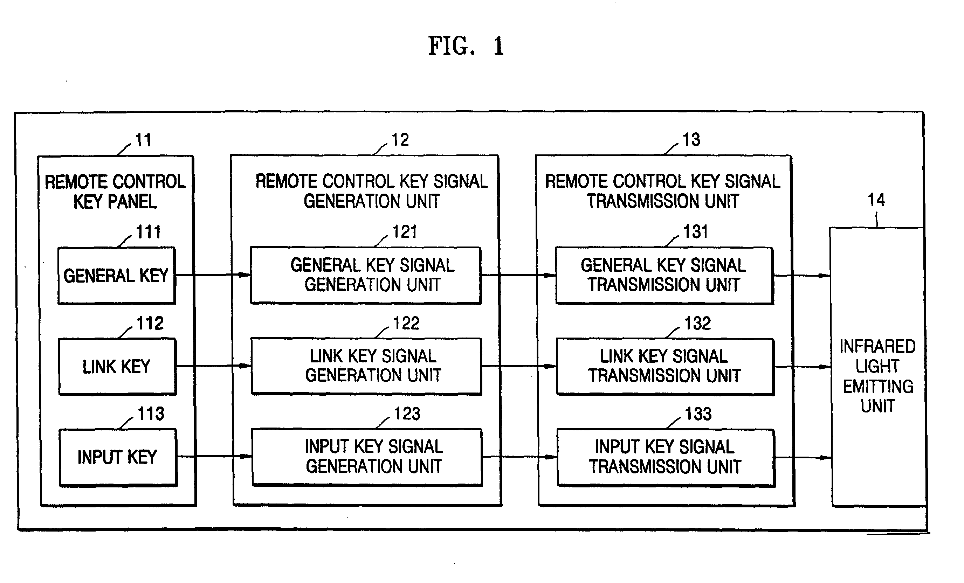

FIG. 1 is a schematic diagram of a remote controller according to an embodiment of the present invention;
   The remote controller includes a remote control key panel 11, a remote control key signal generation unit 12, a remote control key signal transmission unit 13, and an infrared light emitting unit 14.

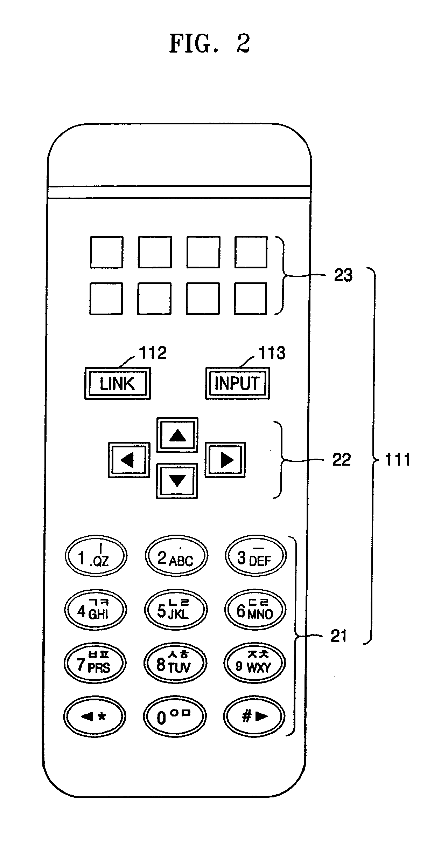

FIG. 2 is a diagram showing the remote control key panel 11 according to an embodiment of the present invention;
   The remote control key panel 11 includes general keys 111, a link key 112, and an input key 113. According to the present embodiment, the general keys 111 include keys for letters combined with numbers 21, arrow keys 22, and other keys 23. The user can control a remote consumer electronics (CE) device by pressing one of general keys 111, the link key 112, and the input key 113 on the remote control key panel. For example, the user can scroll a screen displayed on the remote CE device by pressing the arrow keys 22.

While the keys for letters combined with numbers are used in the present embodiment in consideration of the size of the current remote controller, those skilled in the art will appreciate that keys for letters and keys for numbers may exist separately.

Returning to FIG. 1, the remote control key signal generation unit 12 includes a general key signal generation unit 121, a link key signal generation unit 122, and an input key signal generation unit 123.

When the user presses general keys 111 corresponding to a website address, the general key signal generation unit 121 generates a general key signal corresponding to the website address. In the present and following embodiments, the term "website address" typically refers to a uniform resource locator (URL).

In other words, when the user presses general keys 111 corresponding to the URL, the general key signal generation unit 121 generates a general key signal corresponding to the URL input by pressing general keys 111. For example, when the user presses the 'W' key three times, the 'C' key, the 'N' key twice, the 'C' key, the 'O' key, and the 'M' key, resulting in 'www.cnn.com', the general key signal generation unit 121 generates a general key signal corresponding to 'www.cnn.com' input by pressing the 'W' key three times, the 'C' key, the 'N' key twice, the 'C' key, the 'O' key, and the 'M' key.

In addition, when the user presses a combination of general keys corresponding to a link mark in the web document, the general key signal generation unit 121 generates a general key signal corresponding to the link mark. In the present and following embodiments, the web document refers to a document written in the hypertext markup language (HTML), i.e., an HTML document. The link of the HTML document is written in a format of <A HREF="URL">. In addition, the term 'links' may refer to addresses of websites different from the website providing the web document. Links are used to navigate from the current website to another website. In the present and following embodiments, the term "marks" may refer to numeric marks, letter marks, or any other marks for identifying a combination of links.

In other words, when the user presses a combination of general keys 111 corresponding to the link mark, the general key signal generation unit 121 generates a general key signal corresponding to the link mark input by pressing general keys 111. For example, when integers of from 1 to 10 are used as marks of 10 links in the web document, the user should press one of the numeric keys to select the link. Here, if the user presses the '3' key, the general key signal generation unit 121 generates a general key signal corresponding to the link mark input by pressing the '3' key.

In addition, when the user presses a general key corresponding to one of a number of marks in an input window in the web document, the general key signal generation unit 121 generates a general key signal corresponding to the mark in the input window. In the present and following embodiments, the input window of the HTML document is written in a format such as <INPUT TYPE=TEXT>. Here, the term "input window" refers to a window used to receive information from the user, which is needed for a task processing.

In other words, when the user presses general keys 111 corresponding to a mark of an input window, the general key signal generation unit 121 generates a general key signal corresponding to the mark of an input window input by pressing general keys 111. For example, when integers of from 1 to 10 are used as marks of 10 input windows in the web document, the user should press one of the numeric keys to select the input window. Here, when the user presses the '3' key, the general key signal generation unit 121 generates a general key signal corresponding to the mark of an input window input by pressing the '3' key.

In addition, when the user presses general keys corresponding to input information on an activated input window among the input windows in the web document, the general key signal generation unit 121 generates a general key signal corresponding to the input information. In the present and following embodiments, the term "activated input window" generally refers to an input window having a blinking cursor. Therefore, the user can recognize the activated input window from the blinking cursor. In addition, the term 'input information" refers to information such as user information used to authenticate a user and setting information used to set the configuration of the CE device.

In other words, when the user presses general keys 111 corresponding to the user information or the setting information, the general key signal generation unit 121 generates a general key signal corresponding to the user information or the setting information. For example, when the user presses the 'A' key, the 'B' key, and the 'C' key corresponding to a user ID "ABC", the general key signal generation unit 121 generates a general key signal corresponding to the user ID input by pressing the 'A' key, the 'B' key, and the 'C' key.

When the user presses the link key 112, which is used to request displaying of the marks representing the links in the web document, the link key signal generation unit 122 generates a link key signal to request displaying of the marks representing the links in the web document.

When the user presses the input key 113, which is used to request displaying of the marks representing the input windows in the web document, the input key signal generation unit 123 generates an input key signal to request displaying the marks representing the input windows in the web document.

The remote control key signal transmission unit 13 includes a general key signal transmission unit 131, a link key signal transmission unit 132, and an input key signal transmission unit 133.

The general key signal transmission unit 131 transmits the general key signal generated by the general key signal generation unit 121 as an infrared signal through the infrared light emitting unit 14.

The link key signal transmission unit 132 transmits the link key signal generated by the link key signal generation unit 122 as an infrared signal through the infrared light emitting unit 14.

The input key signal transmission unit 133 transmits the input key signal generated by the input key signal generation unit 123 as an infrared signal through the infrared light emitting unit 14.

In the present and following embodiments, while the remote control key signals, i.e, the general key signal, the link key signal, and the input key signal, are transmitted as infrared signals in consideration of the current remote control communication scheme, those skilled in the art will appreciate that the remote control signal may be transmitted in other forms when the remote control communication scheme is changed into those such as IEEE 802.11 wireless communication or Bluetooth communication in the future.

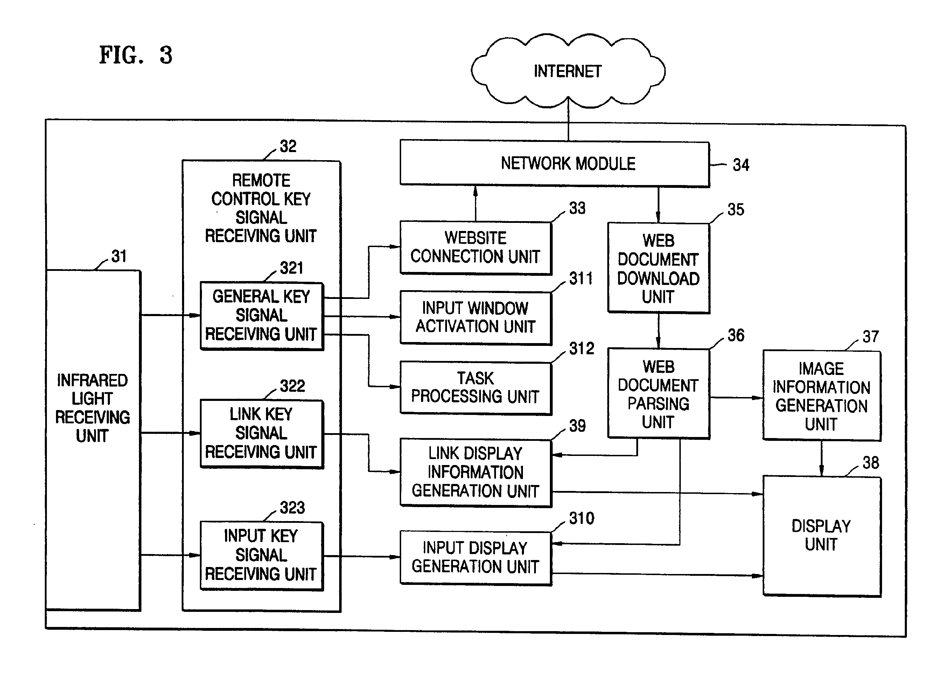

FIG. 3 is a schematic diagram of a CE device according to an embodiment of the present invention.

The CE device includes an infrared light receiving unit 31, a remote control key signal receiving unit 32, a website connection unit 33, a network module 34, a web document download unit 35, a web document parsing unit 36, an image information generation unit 37, a display unit 38, a link display information generation unit 39, an input display information generation unit 310, an input window activation unit 311, and a task processing unit 312.

The remote control key signal receiving unit 32 includes a general key signal receiving unit 321, a link key signal receiving unit 322, and an input key signal receiving unit 323.

The general key signal receiving unit 321 receives a general key signal corresponding to a website address as an infrared signal through the infrared light receiving unit 31. In addition, the general key signal receiving unit 321 receives a general key signal corresponding to the marks of the link selected by the user as an infrared signal through the infrared light receiving unit 31.

In addition, the general key signal receiving unit 321 receives a general key signal corresponding to the marks of the input window selected by the user as an infrared signal through the infrared light receiving unit 31. Further, the general key signal receiving unit 321 receives a general key signal corresponding to information on the activated input window among the input windows in the web document in an infrared signal through the infrared light receiving unit 31.

The link key signal receiving unit 322 receives a link key signal containing a request for displaying the marks representing the links in the web document in an infrared signal through the infrared light receiving unit 31. Here, the link key signal receiving unit 322 receives the link key signal containing a request for displaying the marks representing the links in the web document only when the user recognizing the web document displayed by the display unit 38 presses the link key 112.

The input key signal receiving unit 323 receives an input key signal containing a request for displaying the marks representing the input windows in the web document in an infrared signal through the infrared light receiving unit 31. Here, the input key signal receiving unit 323 receives the input key signal containing a request for displaying the marks representing the input windows in the web document only when the user recognizing the web document displayed by the display unit 38 presses the input key 113.

When the general key signal receiving unit 321 receives the general key signal corresponding to the website address, the website corresponding to the website address contained in the general key signal is connected using the website connection unit 33. For example, when the general key signal corresponding to "www.cnn.com" is received, the website corresponding to "www.cnn.com" is connected using the website connection unit 33.

In addition, when the user recognizing the marks of the links displayed by the display unit 38 selects one of the marks of the links, i.e., when the general key signal corresponding to the link mark selected by the user is received by the general key signal receiving unit 321, the website represented by the link mark contained in the general key signal is connected using the website connection unit 33. For example, when the general key signal corresponding to the mark '3' of the link is received, a website "www.cnn.com/TECH" represented by the mark '3' of the link is connected using the website connection unit 33. In the present embodiment, the website is connected via Internet, using the website connection unit 33 supported by a network module 34.

The web document download unit 35 downloads the web document from the website connected by the website connection unit 33. For example, the web document download unit 35 downloads a CNN Internet newspaper from "www.cnn.com." In the present embodiment, the web document is downloaded via Internet, using the website download unit 35 supported by the network module 34.

The web document parsing unit 36 parses the web document downloaded by the web document download unit 35. In the present embodiment, the web document is an HTML document so that the web document parsing unit 36 is an HTML parser. In other words, the web document parsing unit 36 parses the HTML document downloaded by the web document download unit 35 according to HTML grammar. The image information generation unit 37 generates image information of the web document based on the parsing result of the web document parsing unit 36. In the present embodiment, the web document is an HTML document so that the image information generation unit 37 generates image information based on the parsing result such as <IMG SRC="path of image file">.

The display unit 38 displays the image of the web document based on the image information generated by the image information generation unit 37. For example, the display unit 38 displays an image of the CNN Internet newspaper. In addition, the display unit 38 displays marks representing the links in the web documents based on the link display information generated by the link display information generation unit 39. According to the present embodiment, there are two methods for the display unit 38 to display marks representing the links in the web document.

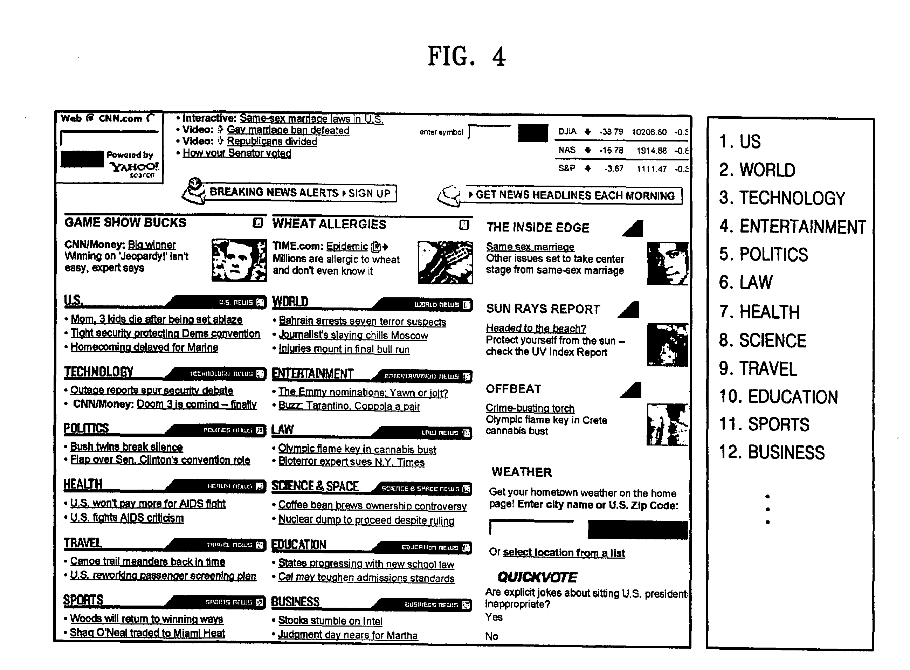

FIG. 4 is a diagram showing a first link displaying method according to an embodiment of the present invention.

According to the first link displaying method, the display unit 38 displays the numeric marks representing the links in the web document in a window separate from the displayed image of the web document. While numeric marks are used in FIG. 4, letter marks or other marks may also be used.

Although, the display unit 38 displays the numeric marks representing the links in the web document on a window separate from the displayed image of the web document, as shown in FIG. 4, the display unit 38 may display the numeric marks representing the links in the web document in a window overlapping the displayed image of the web document. In addition, although the links in the separated window shown in FIG. 4 are stored and displayed in the order of the locations of the links, the links may also be displayed in the order of the link names, or in the order of the time when the link is inserted into the web document. Here, the sorting order of the links just depends on the user's choice.

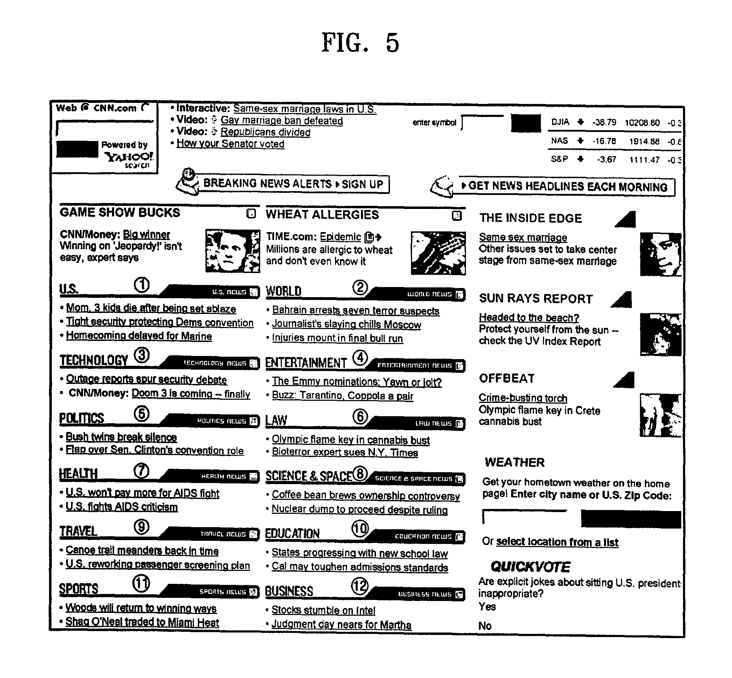

FIG. 5 is a diagram showing a second link displaying method according to an embodiment of the present invention.

According to the second link displaying method, the display unit 38 displays the numeric marks representing the links in the web document at positions corresponding to those of the links in the web document. While the numeric marks are used in FIG. 5, letter marks or other marks may also be used.

The user can easily select the link by selecting one of the numbers displayed on the screen of FIG. 4 or 5.

In addition, the display unit 38 displays marks representing the input windows in the web documents based on the input display information generated by the input display information generation unit 310. According to the present embodiment, there are two methods in which the display unit 38 displays marks representing the input windows in the web document.

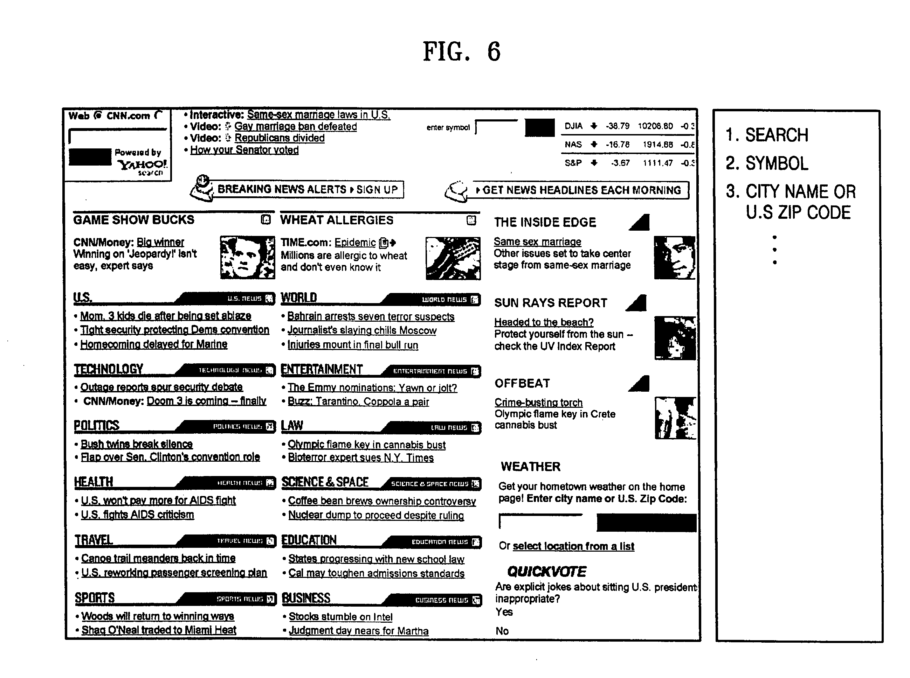

FIG. 6 is a diagram showing a first input displaying method according to an embodiment of the present invention.

According to the first input displaying method, the display unit 38 displays the numeric marks representing the input windows in the web document in a window separate from the displayed image of the web document. While the numeric marks are used in FIG. 6, letter marks or other marks may also be used.

Although, the display unit 38 displays the numeric marks representing the input windows in the web document in a window separate from the displayed image of the web document, as shown in FIG. 6, the display unit 38 may display the numeric marks representing the input windows in the web document in a window overlapping the displayed image of the web document. In addition, although the input windows are displayed in the separated window in the order of the locations of the links, as shown in FIG. 4, the input windows may be displayed in the order of the input window names, or in the order of the time when the input window is inserted into the web document. Here, the sorting order of the input windows just depends on the user choice.

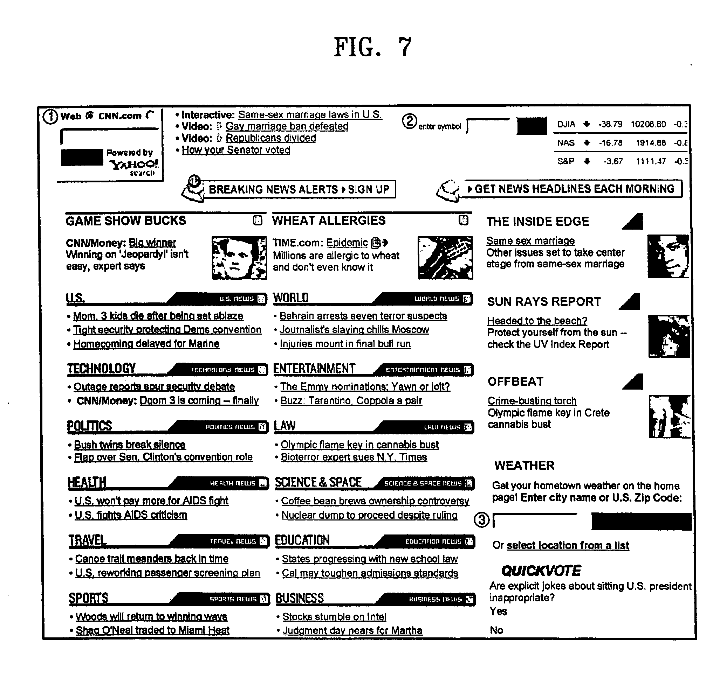

FIG. 7 is a diagram showing a second input displaying method according to an embodiment of the present invention.

According to the second input displaying method, the display unit 38 displays numeric marks representing the input windows in the web document at positions corresponding to those of the input windows in the web document. While numeric marks are used in FIG. 7, letter marks or other marks may also be used.

The user can easily select the input window by selecting one of the numbers displayed on the screen of FIG. 6 or 7.

When the link key signal receiving unit 322 receives a link key signal, the link display information generation unit 39 generates link display information to display the marks representing the links in the web document based on the result parsed by the web document parsing unit 36.

When the input key signal receiving unit 323 receives an input key signal, the input display information generation unit 310 generates input display information to display the marks representing the input windows in the web document based on the result parsed by the web document parsing unit 36.

When the user recognizes the marks of the input windows displayed by the display unit 38 and selects one of the marks of the input windows, i.e., when the general key signal receiving unit 321 receives the general key signal corresponding to the mark in an input window selected by the user, the input window activation unit 311 activates an input window represented by the selected mark contained in the general key signal. For example, when the general key signal corresponding to the mark 3 of the input window is received, the website connection unit 33 activates an input window represented by the mark 3 so that a cursor in the activated input window blinks. When the user recognizes the input window activated by the input window activation unit 311 and inputs information required in a process, i.e., when the general key signal receiving unit 321 receives the general key signal corresponding to the input information on the activated input window, the task processing unit 312 processes the task on the information input by the user. For example, when the general key signal receiving unit 321 receives the general key signal corresponding to the user ID "ABC," the task processing unit 312 performs an authentication process using the user ID "ABC."

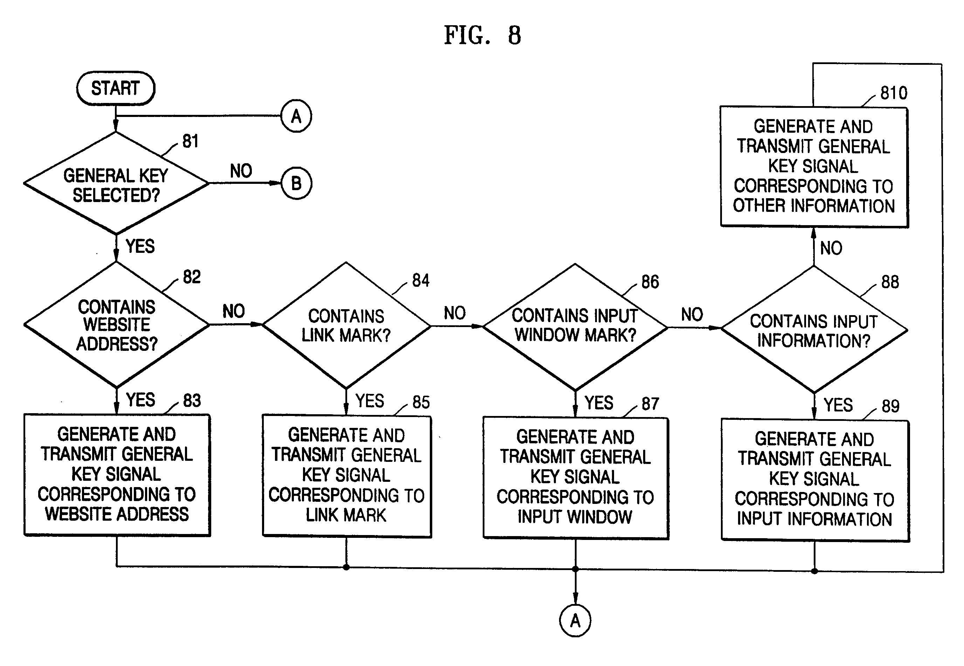

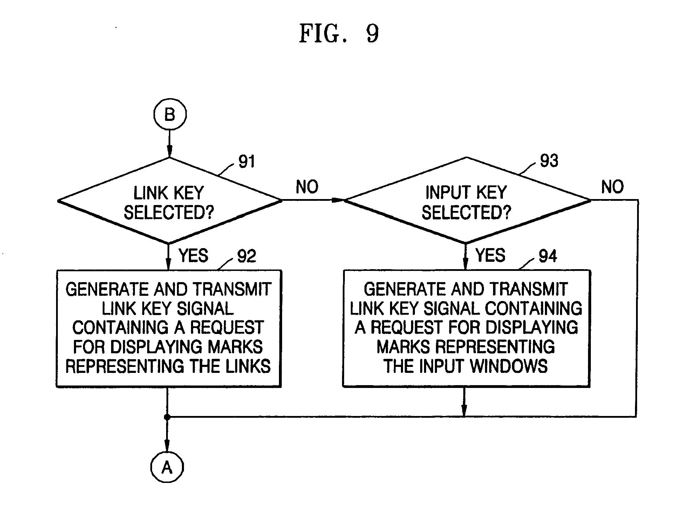

FIGS. 8 and 9 are flowcharts for explaining a remote controlling method according to an embodiment of the present invention.

According to an embodiment of the present invention, the remote controlling method includes operations processed sequentially by the remote controller shown in FIG. 1. Therefore, the afore-mentioned description regarding the remote controller shown in FIG. 1 also applies to the remote controlling method, though omitted herein.

In operation 81, the remote controller determines whether general keys are selected by the user.

If so, in operation 82, the remote controller determines whether general keys corresponding to the website address are selected by the user.

If so, in operation 83, the remote controller generates a general key signal corresponding to the website address and transmits the generated general key signal.

Otherwise, in operation 84, the remote controller determines whether the user selects general keys corresponding to one of the marks of the links in the web document.

If so, in operation 85, the remote controller generates a general key signal corresponding to the link mark and transmits the generated general key signal.

Otherwise, in operation 86, the remote controller determines whether the user selects general keys corresponding to one of the marks of the input windows in the web document.

If so, in operation 87, the remote controller generates a general key signal corresponding to the mark in an input window and transmits the generated general key signal.

Otherwise, in operation 88, the remote controller determines whether the user selects general keys corresponding to information on the activated input window among the input windows in the web document.

If so, in operation 89, the remote controller generates a general key signal corresponding to the input information and transmits the generated general key signal.

Otherwise, in operation 810, the remote controller generates a general key signal corresponding to information other than the afore-mentioned information and transmits the generated general key signal.

In operation 81, when the remote controller determines that general keys are not selected by the user, then, in operation 91, the remote controller determines whether the user selects the link key to request display of the marks of the links in the web document.

If so, in operation 92, the remote controller generates the link key signal containing a request for displaying the marks of the links in the web document and transmits the generated link key signal.

Otherwise, in operation 93, the remote controller determines whether the user selects the input key to request display of the marks of the input windows in the web document.

If so, in operation 94, the remote controller generates the input key signal containing a request for displaying the marks of the input windows in the web document and transmits the generated input key signal.

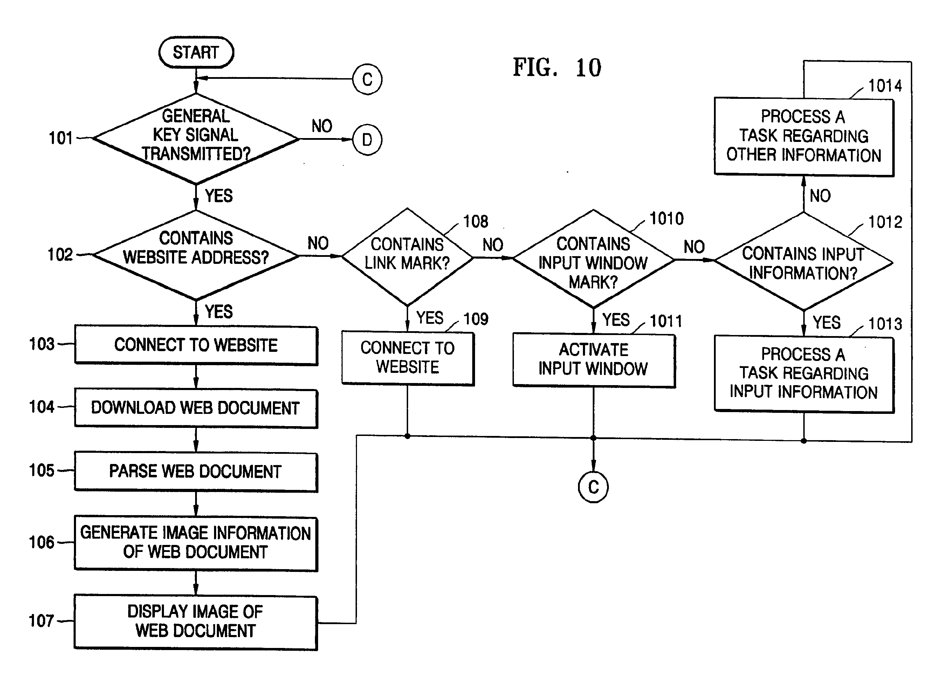

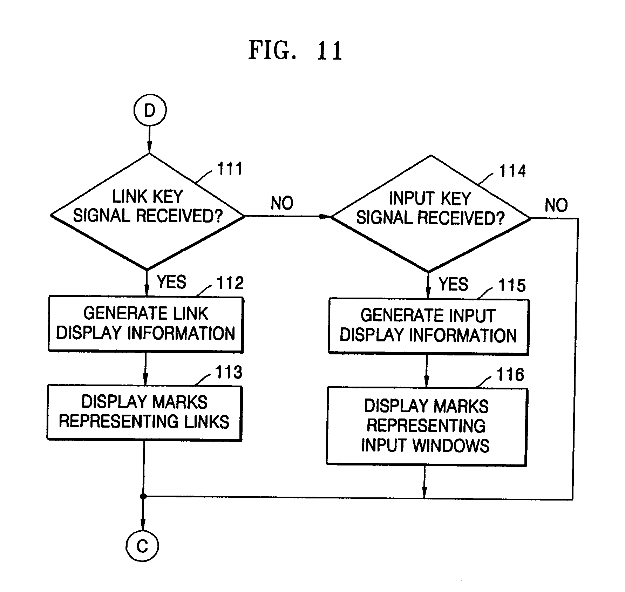

FIGS. 10 and 11 are flowcharts for explaining a method of displaying a web document according to an embodiment of the present invention.

The method of displaying a web document according to an embodiment of the present invention includes the following operations. The method of displaying a web document herein includes operations processed sequentially by the CE device shown in FIG. 3. Therefore, the afore-mentioned description regarding the CE device shown in FIG. 3 is also applied to the method of displaying a web document, though omitted herein.

In operation 101, the CE device determines whether a general key signal is received.

If so, in operation 102, the CE device determines whether a general key signal corresponding to the website address is received.

If so, in operation 103, the website corresponding to the website address contained in a general key signal is connected using the CE device.

In operation 104, the CE device downloads the web document from the website connected in the operation 103.

In operation 105, the CE device parses the web document downloaded in the operation 104.

In operation 106, the image information of the web document is generated from the result parsed in the operation 105.

In operation 107, the CE device displays the image of the web document based on the image information generated in the operation 106.

In operation 102, when the CE device determines that a general key signal corresponding to the website address is not received, then, in operation 108, the CE device determines whether a general key signal corresponding to the link mark selected by the user is received.

If so, in operation 109, the website represented by the link mark contained in a general key signal is connected using the CE device.

Otherwise, in operation 1010, the CE device determines whether a general key signal corresponding to the mark in an input window selected by the user is received.

If so, in operation 1011, the input window represented by the mark in an input window, which is contained in a general key signal, is activated by the CE device.

Otherwise, in operation 1012, the CE device determines whether a general key signal corresponding to input information on the activated input window among the input windows in the web document is received.

If so, in operation 1013, the CE device processes the information input from the user.

Otherwise, in operation 1014, the CE device determines whether a general key signal corresponding to information other than the afore-mentioned information on the activated input window among the input windows in the web document.

In the operation 101, when the CE device determines that a general key signal is not received, then, in operation 111, the CE device determines whether the link key signal containing a request for displaying the marks representing the links in the web documents is received.

If so, in operation 112, the CE device generates the link display information used to display the marks representing the links in the web documents from the result parsed by the operation 105.

In operation 113, the CE device displays the marks representing the links in the web documents based on the link display information generated in the operation 112.

In the operation 111, when the CE device determines that the link key signal containing a request for displaying the marks representing the links in the web document is not received, then, in operation 114, the CE device determines whether the input key signal containing a request for displaying the marks representing the input windows in the web documents is received.

If so, in operation 115, the CE device generates the input display information used to display the marks representing the input windows in the web documents from the result parsed in the operation 105.

In operation 116, the CE device displays the marks representing the input windows in the web document based on the input display information generated in the operation 115.

Further, the afore-mentioned embodiments can be implemented as a computer-executable program. In addition, the computer-executable program can be embodied on a general purpose digital computer using a computer-readable medium.

The computer-readable medium includes magnetic storage media (e.g., ROMs, floppy disks, and hard disks), optical storage media (e.g., CD-ROMs, DVDs) and carrier waves (e.g., transmission via Internet).

According to preferred embodiments of the present invention, it is possible for a user to easily select a link and an input window only using a remote controller having a link key and an input key thereon. Furthermore, it is possible to facilitate processing a website-related task such as web surfing.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a web document comprising:
(a) receiving a signal containing a request for displaying predetermined marks representing respective components of the web document; and
(b) if the signal is received in operation (a), displaying predetermined marks representing the respective components of the web document.

2. The method according to claim 1,
wherein, in the operation (b), the predetermined marks representing the respective components are displayed in a window separate from the displayed image of the web document, and
wherein the predetermined marks are numeric or letter marks.

3. The method according to claim 2, wherein, in the operation (b), the components displayed in the separated window are sorted in the order of component names, times when the components are inserted into the web document, or locations of the components.

4. The method according to claim 1, wherein, in the operation (b), the predetermined marks are displayed at positions corresponding to those of the components of the web document.

5. The method according to any preceding claim, wherein the components are links representing addresses of websites different from the website providing the web document.

6. The method according to claim 5, further comprising:
connecting to the website represented by a link selected by a user from among the displayed links.

7. The method according to any preceding claim, wherein the components are input windows receiving information, from a user, necessary for a task processing.

8. The method according to claim 7, further comprising:
processing the task on the information input to the input window selected among the displayed input windows by the user,.

9. A consumer electronics device comprising:
a signal receiving unit (31) receiving a signal containing a request for displaying predetermined marks representing components of a web document; and
a display unit (38) displaying the predetermined marks representing the components of the web document if the signal is received.

10. The consumer electronics device according to claim 9, wherein the components are links representing addresses of websites different from the website providing the web document, or input windows receiving information necessary for a task processing from a user.

11. A computer-readable medium having embodied thereon a computer program for a method of displaying a web document, the method comprising:
receiving a signal containing a request for displaying predetermined marks representing respective components of the web document; and
if the signal is received, displaying predetermined marks representing the respective components of the web document.

12. A remote controlling method comprising:
(a) generating a signal containing a request for displaying predetermined marks representing respective components of a web document; and
(b) transmitting the generated signal.

13. The remote controlling method according to claim 12, wherein the components are links representing addresses of websites different from the website providing the web document.

14. The remote controlling method according to claim 13, wherein, in the operation (a), when the user selects a link key associated with a request for displaying the predetermined marks representing the links, a link key signal of the request for displaying the predetermined marks representing the links is generated.

15. The remote controlling method according to claim 12, wherein the components are input windows receiving information, from a user, necessary for a task processing.

16. The remote controlling method according to claim 15, wherein, in the operation (a), when the user selects an input key to request to display the predetermined marks representing the input windows, an input key signal requesting display of the predetermined marks representing the input windows is generated.

17. A remote controller comprising:
a signal generation unit (12) generating a signal containing a request for displaying predetermined marks representing respective components of a web document; and
a signal transmission unit (13) transmitting the generated signal.

18. The remote controller according to claim 17, wherein the components are links representing addresses of websites different from the website providing the web document, or input windows receiving information necessary for a task processing from a user.

19. A computer-readable medium having embodied thereon a computer program for a remote controlling method, the method comprising:
generating a signal containing a request for displaying predetermined marks representing respective components of a web document; and
transmitting the generated signal.
